(19) Europäisches Patentamt
European Patent Office
Office européen des brevets

(11) **EP 4 427 938 A1**

(12) **EUROPEAN PATENT APPLICATION**
published in accordance with Art. 153(4) EPC

(43) Date of publication:
**11.09.2024 Bulletin 2024/37**

(21) Application number: **22890233.4**

(22) Date of filing: **20.10.2022**

(51) International Patent Classification (IPC):
*B32B 27/36* (2006.01)   *B32B 27/32* (2006.01)
*B32B 38/18* (2006.01)   *B32B 38/00* (2006.01)
*B29C 48/08* (2019.01)   *B32B 27/30* (2006.01)

(52) Cooperative Patent Classification (CPC):
**B29C 48/08; B32B 27/30; B32B 27/32;**
**B32B 27/36; B32B 38/00; B32B 38/18;**
Y02W 90/10

(86) International application number:
**PCT/KR2022/016077**

(87) International publication number:
**WO 2023/080498 (11.05.2023 Gazette 2023/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.11.2021 KR 20210149261**
**05.11.2021 KR 20210151313**

(71) Applicant: **SK microworks Co., Ltd.**
**Suwon-si, Gyeonggi-do 16336 (KR)**

(72) Inventors:
• **HAN, Kweon Hyung**
  **Suwon-si, Gyeonggi-do 16338 (KR)**
• **LEE, Seokin**
  **Suwon-si, Gyeonggi-do 16338 (KR)**

(74) Representative: **Dehns**
**St. Bride's House**
**10 Salisbury Square**
**London EC4Y 8JD (GB)**

(54) **MULTI-LAYER BARRIER FILM, METHOD FOR PRODUCING SAME, AND PACKAGING MATERIAL INCLUDING SAME**

(57)    Embodiments of the present invention relate to a multi-layer barrier film, a method for producing same, and a packaging material including same. The multi-layer barrier film has an oxygen permeability of at most 30 cc/m2.atm.day and is composed of at least two different resin layers that are alternately laminated. The two dif-ferent resin layers include: a first resin layer including an aliphatic polyester-based polymer; and a second resin layer which is resin layer 2a including butenediol vinyl alcohol copolymer (BVOH) or resin layer 2b including ethylene vinyl alcohol (EVOH).

[Fig. 1]

## Description

## Technical Field

The present invention relates to a multilayer barrier film, to a process for preparing the same, and to a packaging material comprising the same.

## Background Art

Plastic films commonly used for packaging purposes include cellophane, polyvinyl chloride (PVC), polyethylene (PE), polypropylene (PP), nylon, and polyethylene terephthalate (PET).

However, cellophane films cause severe environmental pollution during the preparation process; thus, their production is subject to a lot of regulations. Polyvinyl chloride films generate harmful substances such as dioxin when incinerated; thus, their use is subject to a lot of regulations. In addition, polyethylene films lack thermal resistance and mechanical properties; thus, their use is limited except for low-quality packaging purposes. Polypropylene, nylon, and polyethylene terephthalate have relatively stable molecular structures and good mechanical properties. However, when they are used for packaging purposes and then landfilled without special treatment, they are hardly decomposed due to their chemical and biological stability and accumulate in the ground, thereby shortening the lifespan of the landfill and causing the problem of soil contamination.

To make up for the shortcomings of these non-degradable plastic films, polylactic acid films, which are aliphatic polyesters with high biodegradability of the resin itself, have been widely used in recent years. Although these films have good mechanical properties, their use is limited for the lack of flexibility due to the unique crystal structure.

To improve this problem, Japanese Laid-open Patent Publication No. 2006-272712 discloses a method of preparing a film using a biodegradable aliphatic polyester alone other than polylactic acid. In such a case, not only is the glass transition temperature so low that it is not easy to prepare a film using a biaxial stretching method, but also the mechanical strength of a final film is low and the heat shrinkage rate is high, causing many problems during the processing thereof.

In addition, Japanese Laid-open Patent Publication No. 2003-160202 discloses a method of blending polylactic acid with an aliphatic-aromatic copolyester to impart flexibility and heat-sealing properties to a film. However, there is a problem in this method in that the transparency of a final film is significantly reduced, and its oxygen permeability is high, due to the low compatibility between polylactic acid and the aliphatic-aromatic copolyester and the use of a plasticizer, making it difficult to be used in packaging applications that require transparency and a low oxygen permeability.

[Prior Art Document]

[Patent Document]

(Patent Document 1) Japanese Laid-open Patent Publication No. 2006-272712
(Patent Document 2) Japanese Laid-open Patent Publication No. 2003-160202

## Detailed Description of the Invention

## Technical Problem

An object of the present invention is to solve the problems of the prior art described above.

Another object of the present invention is to provide a multilayer barrier film that comprises two or more different types of resin layers alternately laminated, wherein the resin layers comprise a first resin layer comprising an aliphatic polyester-based polymer; and a second-a resin layer comprising a butenediol vinyl alcohol copolymer (BVOH), and a process for preparing the same.

In addition, another object of the present invention is to provide a multilayer barrier film that comprises two or more different types of resin layers alternately laminated, wherein the resin layers comprise a first resin layer comprising an aliphatic polyester-based polymer; and a second-b resin layer comprising an ethylene vinyl alcohol (EVOH), and the oxygen permeability is 30 cc/m²·atm·day or less, and a process for preparing the same.

In addition, another object of the present invention is to provide a high-quality, environmentally friendly packaging material that is biodegradable at a certain level and environmentally friendly, in which transparency and oxygen permeability are improved, by using the multilayer barrier film.

**Solution to the Problem**

The present invention provides a multilayer barrier film that comprises two or more different types of resin layers alternately laminated, wherein the resin layers comprise a first resin layer comprising an aliphatic polyester-based polymer; and a second-a resin layer comprising a butenediol vinyl alcohol copolymer (BVOH).

In addition, the present invention provides a multilayer barrier film that comprises two or more different types of resin layers alternately laminated, wherein the resin layers comprise a first resin layer comprising an aliphatic polyester-based polymer; and a second-b resin layer comprising an ethylene vinyl alcohol (EVOH), and the oxygen permeability is 30 cc/m$^2$·atm·day or less.

In addition, the present invention provides a process for preparing a multilayer barrier film that comprises preparing a first resin comprising an aliphatic polyester-based polymer; and a second-a resin comprising a butenediol vinyl alcohol copolymer, respectively (step 1); melt-extruding the first resin and the second-a resin, respectively, and alternately laminating a first resin layer and a second-a resin layer to obtain a sheet in which two or more different types of resin layers are alternately laminated (step 2); and biaxially stretching and heat-setting the laminated sheet to obtain a multilayer barrier film (step 3).

In addition, the present invention provides a process for preparing a multilayer barrier film that comprises preparing a first resin comprising an aliphatic polyester-based polymer; and a second-b resin comprising an ethylene vinyl alcohol, respectively (step 1); melt-extruding the first resin and the second-b resin, respectively, and alternately laminating a first resin layer and a second-b resin layer to obtain a sheet in which two or more different types of resin layers are alternately laminated (step 2); and biaxially stretching and heat-setting the laminated sheet to obtain a multilayer barrier film (step 3), wherein the oxygen permeability of the multilayer barrier film is 30 cc/m$^2$·atm·day or less.

Further, the present invention provides a packaging material that comprises the above multilayer barrier film.

**Advantageous Effects of the Invention**

The multilayer barrier film according to an embodiment is characterized in that as it comprises two or more different types of resin layers alternately laminated, wherein the resin layers comprise a first resin layer comprising an aliphatic polyester-based polymer; and a second-a resin layer comprising a butenediol vinyl alcohol copolymer, it is possible to achieve excellent transparency and barrier properties to oxygen at the same time.

In addition, the multilayer barrier film according to an embodiment is characterized in that as it comprises two or more different types of resin layers alternately laminated, wherein the resin layers comprise a first resin layer comprising an aliphatic polyester-based polymer; and a second-b resin layer comprising an ethylene vinyl alcohol, and it satisfies an oxygen permeability of 30 cc/m$^2$·atm·day or less, it is possible to achieve excellent transparency and barrier properties to oxygen at the same time.

In addition, the process for preparing a multilayer barrier film according to an embodiment can further enhance moldability, processability, and productivity in an economical and efficient way.

Further, the multilayer barrier film not only does not cause interlayer delamination, along with the above characteristics, and has environmentally friendly features as it is biodegradable at a certain level in nature by containing a biodegradable material; thus, it can provide a high-quality packaging material that can be used in various fields.

**Brief Description of the Drawing**

Fig. 1 is a photograph showing the result of an interfacial delamination test of the film according to Test Example 5a.
Fig. 2 is a photograph showing the result of an interfacial delamination test of the film according to Test Example 6b.

**Best Mode for Carrying out the Invention**

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In the present specification, a singular expression is understood to encompass a singular or plural expression, interpreted in context, unless otherwise specified.

In addition, all numbers expressing the physical properties, dimensions, reaction conditions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In the present specification, in the case where an element is mentioned to be formed "on a side" or "on another side," or "on" or "under" another element, it means not only that one element is directly formed "on a side" or "on another side," or "on" or "under" another element, but also that one element is indirectly formed on or under another element with other element(s) interposed between them.

Multilayer barrier film

As the multilayer barrier film according to an embodiment comprises two or more different types of resin layers alternately laminated, wherein the resin layers comprise a first resin layer comprising an aliphatic polyester-based polymer; and a second-a resin layer comprising a butenediol vinyl alcohol copolymer (EVOH), it is possible to improve transparency and barrier properties to oxygen at the same time.

In the multilayer barrier film according to an embodiment, two or more different types of resin layers are alternately laminated, wherein the resin layers comprise a first resin layer comprising an aliphatic polyester-based polymer; and a second-a resin layer comprising a butenediol vinyl alcohol copolymer.

As the multilayer barrier film according to another embodiment comprises two or more different types of resin layers alternately laminated, wherein the resin layers comprise a first resin layer comprising an aliphatic polyester-based polymer; and a second-b resin layer comprising an ethylene vinyl alcohol, and it satisfies an oxygen permeability of 30 cc/m$^2$·atm·day or less, it is possible to improve transparency and barrier properties to oxygen at the same time.

Hereinafter, each layer of the multilayer biodegradable barrier film will be described in detail.

First resin layer

The first resin layer may comprise an aliphatic polyester-based polymer as a main component.

In the present specification, the "main component" means that the proportion of a specific component among the entire components is 50% by weight or more, 70% by weight or more, 80% by weight or more, 90% by weight or more, 95% by weight or more, or 98% by weight or more, and 100% by weight or less, 98% by weight or less, 95% by weight or less, or 90% by weight or less.

For example, the first resin layer may comprise an aliphatic polyester-based polymer in an amount of 95% by weight to 100% by weight.

The aliphatic polyester-based polymer comprises at least one selected from the group consisting of polylactic acid, polycaprolactone, polyhydroxyalkanoate, polyglycolic acid, polybutylene succinate, polybutylene adipate, and each copolymer thereof.

In an embodiment, the first resin layer may comprise a polylactic acid-based polymer as a main component. Specifically, the first resin layer may comprise a polylactic acid-based polymer in an amount of 50% by weight or more, 70% by weight or more, 80% by weight or more, 90% by weight or more, 95% by weight or more, or 98% by weight or more, based on the total weight of the first resin layer, but it is not limited thereto.

Since the polylactic acid-based polymer, unlike petroleum-based resins, is based on biomass, recycled resources can be used. It emits less carbon dioxide, the main cause of global warming, during its production as compared with conventional resins and is environmentally friendly as it is biodegraded by moisture and microorganisms when landfilled.

The polylactic acid-based polymer may have a weight average molecular weight (Mw) of 100,000 to 1,000,000 g/mole, 100,000 to 800,000 g/mole, 100,000 to 500,000 g/mole, or 100,000 to 300,000 g/mole. The weight average molecular weight (Mw) may be measured by gel permeation chromatography (GPC). When the weight average molecular weight (Mw) of the polylactic acid-based polymer satisfies the above range, the mechanical and optical properties of the multilayer barrier film can be further enhanced.

The polylactic acid-based polymer may comprise L-lactic acid, D-lactic acid, D,L-lactic acid, or a combination thereof. Specifically, the polylactic acid-based polymer may be a random copolymer of L-lactic acid and D-lactic acid.

Here, the content of D-lactic acid may be 1% by weight to 5% by weight, 1% by weight to 4% by weight, 2% by weight to 4% by weight, 1% by weight to 3% by weight, 2% by weight to 3% by weight, or 1% by weight to 2% by weight, based on the total weight of the polylactic acid-based polymer. If the content of D-lactic acid satisfies the above range, processability may be enhanced in film stretching.

In addition, the content of L-lactic acid may be 80% by weight to 99% by weight, 83% by weight to 99% by weight, 85% by weight to 99% by weight, or 90% by weight to 99% by weight, based on the total weight of the polylactic acid-based polymer. If the content of L-lactic acid satisfies the above range, the thermal resistance properties of a film can be enhanced.

The polylactic acid-based resin may have a melting temperature (Tm) of 50°C to 300°C, 100°C to 250°C, 110°C to 220°C, or 120°C to 200°C.

The polylactic acid-based resin may have a glass transition temperature (Tg) of 30°C to 100°C, 30°C to 80°C, 40°C to 80°C, 40°C to 70°C, or 45°C to 65°C.

The polylactic acid-based resin may have a melt viscosity ($V_{PLA}$) at 210°C of 5,000 poise to 15,000 poise, 5,000 poise to 12,000 poise, 7,000 poise to 12,000 poise, 7,500 poise to 11,000 poise, or 8,000 poise to 10,000 poise. Here, the melt viscosity is measured at 210°C and a shear rate of 100 s$^{-1}$ using a rheometer.

In addition, the first resin layer may have a melt viscosity at 210°C of 5,000 poise to 15,000 poise, 5,000 poise to 12,000 poise, 7,000 poise to 12,000 poise, 7,500 poise to 11,000 poise, or 8,000 poise to 10,000 poise.

In an embodiment, the first resin layer may comprise an aliphatic polyester-based polymer alone, or the aliphatic polyester-based polymer may be copolymerized with a small amount of other hydroxy carboxylic acid units and employed as a resin for the first resin layer, or the aliphatic polyester-based polymer may be mixed with a small amount of a vinyl acetate or vinyl laurate copolymer and employed as a resin for the first resin layer, or the aliphatic polyester-based polymer may be mixed with butyl acrylate-based rubber of a core-shell structure and employed as a resin for the first resin layer.

Meanwhile, the first resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Second-a resin layer

The second-a resin layer may comprise a butenediol vinyl alcohol copolymer as a main component.

For example, the second-a resin layer may comprise a butenediol vinyl alcohol copolymer in an amount of 95% by weight to 100% by weight.

The butenediol vinyl alcohol copolymer may be a copolymer formed by the copolymerization of butenediol and vinyl alcohol.

The butenediol vinyl alcohol copolymer is a biodegradable copolymer certified as biodegradable according to the ISO 14851 or ISO 14855 standard, specifically, a biodegradable copolymer certified as biodegradable according to the ISO 14855 standard. Thus, if the multilayer barrier film comprises a butenediol vinyl alcohol copolymer as the second-a resin layer, it is advantageous in terms of environmentally friendliness since it can be naturally decomposed by microorganisms, and it has excellent compatibility with the aliphatic polyester-based resin employed in the first resin layer, whereby the desired effect can be readily achieved.

If the second-a resin layer comprises an aliphatic polyester-based resin or an aliphatic-aromatic copolymerized polyester-based resin (e.g., polybutylene adipate terephthalate (PBAT) resin), other than the butenediol vinyl alcohol copolymer, as a main component, not only may the optical properties such as haze be relatively high, but the oxygen permeability is also very high, whereby the effect as a barrier film cannot be achieved. That is, there may be limitations in the use of packaging for a substance prone to oxygen.

The degree of saponification of the butenediol vinyl alcohol copolymer may be 30% or more.

Specifically, the degree of saponification of the butenediol vinyl alcohol copolymer may be 40% or more, 50% or more, 60% or more, 70% or more, 80% or more, 90% or more, or 95% or more, but it is not limited thereto.

The degree of saponification may be measured by the method of JIS K 6726.

Specifically, if the degree of saponification is 97% by mole or more, it may be measured by the following saponification degree measurement method A. If the degree of saponification is less than 97% by mole, it may be measured by the following saponification degree measurement method B.

$$<\text{Calculation equation}>$$

$$A\,(\%) = [0.60 \times (a - b) \times F \times 100]/(S \times P)$$

$$B\,(\%) = (44.05 \times A)/(60.5 - 0.42 \times A)$$

$$C\,(\%) = 100 - B$$

$$P = 100 - [R + N + (K - N \times 0.378)]$$

A: weight of residual acetic acid groups (%)
B: mole of residual acetic acid groups (%)

C: mole of saponification degree (%)
S: weight of an original sample (g)
P: purity (%)
F: concentration coefficient of a 0.1 N NaOH solution
R: volatile content (%)
N: sodium acetate (%)
K: ash content (%)
<Saponification degree measurement method A>

A 300-ml Erlenmeyer flask is charged with 3 g of an original sample and 100 ml of water, which is dissolved by heating (95°C to 98°C) and cooled. Then, 25 ml of a 0.1 N NaOH solution is added, and it is left at room temperature for 2 hours or longer.

Next, 25 ml of a 0.1 N $H_2SO_4$ solution is added, and the excess sulfuric acid is titrated with a 0.1 N NaOH solution until a light red color appears using phenolphthalein as an indicator. The titrated amount is set to "a" ml.

Separately, a blank test is conducted in the same manner as the main test, and the degree of saponification is calculated from Equation 1 above, taking the titration amount of the 0.1 N NaOH solution used in the blank test as "b" ml.

<Saponification degree measurement method B>

A 300-ml Erlenmeyer flask is charged with 0.5 g of an original sample and 100 ml of water, which is dissolved by heating (95°C to 98°C) and cooled. Then, 25 ml of a 0.2 N NaOH solution is added, and it is left at room temperature for 2 hours or longer.

Next, 25 ml of a 0.2 N $H_2SO_4$ solution is added, and the excess sulfuric acid is titrated with a 0.1 N NaOH solution until a light red color appears using phenolphthalein as an indicator. The titrated amount is set to "a" ml.

Separately, a blank test is conducted in the same manner as the main test, and the degree of saponification is calculated from Equation 1 above, taking the titration amount of the 0.1 N NaOH solution used in the blank test as "b" ml.

When the degree of saponification of a butenediol vinyl alcohol copolymer measured by the above method is within the above range, a film with excellent barrier properties to oxygen can be achieved.

In addition, the butenediol vinyl alcohol copolymer may have a degree of polymerization of 50 to 50,000, 50 to 30,000, 50 to 10,000, 50 to 5,000, 100 to 5,000, 300 to 5,000, or 300 to 3,000.

The butenediol vinyl alcohol copolymer may have a weight average molecular weight (Mw) of 1,000 to 1,000,000 g/mole, 1,000 to 100,000 g/mole, 1,000 to 50,000 g/mole, or 3,000 to 50,000 g/mole. The weight average molecular weight (Mw) may be measured by gel permeation chromatography (GPC). When the weight average molecular weight (Mw) of the butenediol vinyl alcohol copolymer satisfies the above range, the compatibility with the first resin layer comprising an aliphatic polyester-based polymer as a main component and processability can be more excellent, and transparency and barrier properties to oxygen can be further enhanced while appropriate strength of the film according to an embodiment is maintained.

The butenediol vinyl alcohol copolymer may have a melting temperature (Tm) of 150°C to 250°C, 170°C to 250°C, 170°C to 230°C, or 190°C to 230°C.

The butenediol vinyl alcohol copolymer may have a glass transition temperature (Tg) of 50°C to 100°C, 60°C to 100°C, 60°C to 90°C, 65°C to 90°C, or 65°C to 80°C.

The butenediol vinyl alcohol copolymer may have a melt viscosity ($V_{BVOH}$) at 210°C of 3,000 poise to 30,000 poise, 5,000 poise to 18,000 poise, or 7,000 poise to 18,000 poise. Here, the melt viscosity is measured at 210°C and a shear rate of 100 $s^{-1}$ using a rheometer.

The butenediol vinyl alcohol copolymer may have a density measured by ASTM D792 of 1.0 $g/cm^3$ to 1.5 $g/cm^3$, 1.1 $g/cm^3$ to 1.5 $g/cm^3$, 1.1 $g/cm^3$ to 1.3 $g/cm^3$, or 1.1 $g/cm^3$ to 1.25 $g/cm^3$, or 1.1 $g/cm^3$ to 1.2 $g/cm^3$.

The butenediol vinyl alcohol copolymer may have a melt index (MI) (210°C and 2.16 kg condition) measured by ASTM D1238 of 0.5 g/10 minutes to 70 g/10 minutes, 3 g/10 minutes to 70 g/10 minutes, 3 g/10 minutes to 50 g/10 minutes, or 3 g/10 minutes to 40 g/10 minutes.

Meanwhile, the second-a resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Second-b resin layer

The second-b resin layer may comprise an ethylene vinyl alcohol as a main component.

For example, the second-b resin layer may comprise an ethylene vinyl alcohol in an amount of 95% by weight to 100% by weight.

The ethylene vinyl alcohol may be a copolymer formed by copolymerization of ethylene and vinyl alcohol and has excellent gas barrier properties.

In the ethylene vinyl alcohol, it is advantageous for achieving the object according to the embodiment that the ethylene ratio in the monomer composition before copolymerization is a specific content or less.

According to an embodiment, the content of ethylene in the ethylene vinyl alcohol may be 70% by mole or less.

Specifically, the content of ethylene in the ethylene vinyl alcohol may be 60% by mole or less, 50% by mole or less, 45% by mole or less, 40% by mole or less, 35% by mole or less, or 30% by mole or less, and 10% by mole or more, 15% by mole or more, 20% by mole or more, or 25% by mole or more.

For example, the content of ethylene in the ethylene vinyl alcohol may be 10% by mole to 50% by mole, 10% by mole to 45% by mole, or 15% by mole to 40% by mole, but it is not limited thereto.

When the content of ethylene in the ethylene vinyl alcohol is within the above range, a film with excellent barrier properties to oxygen, while satisfying transparency, can be achieved. In addition, when the content of ethylene in the ethylene vinyl alcohol is within the above range, it can be widely used as a food packaging material as well as a non-food packaging material.

The ethylene content may be measured by proton (H) NMR.

When the multilayer barrier film according to an embodiment comprises the ethylene vinyl alcohol as the second-b resin layer, it has excellent compatibility with the aliphatic polyester-based resin employed in the first resin layer, whereby the desired effect can be readily achieved.

For example, if the second-b resin layer comprises an aliphatic polyester-based resin or an aliphatic-aromatic copolymerized polyester-based resin (e.g., polybutylene adipate terephthalate (PBAT) resin), other than the ethylene vinyl alcohol, as a main component, not only may the optical properties such as haze be relatively high, but the oxygen permeability is also very high, whereby the effect as a barrier film cannot be achieved. That is, there may be limitations in the use of packaging for a substance prone to oxygen.

In addition, the ethylene vinyl alcohol may have a degree of polymerization of 1,000 to 6,000, 1,000 to 5,000, or 1,300 to 5,000. The degree of polymerization may be measured by gel permeation chromatography (GPC).

The ethylene vinyl alcohol may have a weight average molecular weight (Mw) of 50,000 to 600,000 g/mole, 50,000 to 500,000 g/mole, 100,000 to 500,000 g/mole, or 100,000 to 400,000 g/mole. The weight average molecular weight (Mw) may be measured by gel permeation chromatography (GPC). When the weight average molecular weight (Mw) of the ethylene vinyl alcohol satisfies the above range, the compatibility with the first resin layer comprising an aliphatic polyester-based polymer as a main component and processability can be more excellent, and transparency and barrier properties to oxygen can be further enhanced while appropriate strength of the film according to an embodiment is maintained.

The ethylene vinyl alcohol may have a melting temperature (Tm) of 130°C to 210°C, 150°C to 210°C, 150°C to 200°C, or 150°C to 190°C.

The ethylene vinyl alcohol may have a glass transition temperature (Tg) of 40°C to 90°C, 50°C to 90°C, 50°C to 80°C, or 50°C to 70°C.

The ethylene vinyl alcohol may have a melt viscosity ($V_{EVOH}$) at 210°C of 3,000 poise to 15,000 poise, 3,000 poise to 12,000 poise, 3,000 poise to 10,000 poise, or 4,000 poise to 9,000 poise. Here, the melt viscosity is measured at 210°C and a shear rate of 100 s$^{-1}$ using a rheometer.

In addition, the second-b resin layer may have a melt viscosity at 210°C of 2,000 poise to 20,000 poise, 2,000 poise to 15,000 poise, 3,000 poise to 10,000 poise, 4,000 poise to 15,000 poise, 4,000 poise to 12,000 poise, or 4,000 poise to 10,000 poise.

The ethylene vinyl alcohol may have a density measured by ASTM D792 of 1.1 g/cm$^3$ to 1.3 g/cm$^3$, 1.1 g/cm$^3$ to 1.25 g/cm$^3$, 1.14 g/cm$^3$ to 1.25 g/cm$^3$, or 1.14 g/cm$^3$ to 1.21 g/cm$^3$.

The ethylene vinyl alcohol may have a melt index (MI) (210°C and 2.16 kg condition) measured by ASTM D1238 of 1 g/10 minutes to 20 g/10 minutes, 1 g/10 minutes to 18 g/10 minutes, 2 g/10 minutes to 16 g/10 minutes, or 2.5 g/10 minutes to 14 g/10 minutes.

Meanwhile, the second-b resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Third resin layer

According to an embodiment, a third resin layer, which comprises a resin different from those used in the first resin layer and the second resin layer as a main component, may be alternately laminated with the first resin layer and the second resin layer within a range that does not impair the effect of the present invention.

In the present specification, the second resin layer refers to the second-a resin layer or the second-b resin layer.

The resin that may be used in the third resin layer may be an aliphatic polyester-based resin, an aliphatic-aromatic copolyester-based resin, or a gas impermeable resin.

For example, the aliphatic polyester-based resin or the aliphatic-aromatic copolyester-based resin may comprise at least one selected from the group consisting of a polybutylene adipate terephthalate (PBAT) resin, a polybutylene succinate (PBS) resin, a polybutylene adipate (PBA) resin, a polybutylene succinate-adipate (PBSA) resin, a polybutylene succinate-terephthalate (PBST) resin, a polyhydroxybutyrate-valerate (PHBV) resin, a polycaprolactone (PCL) resin, and a polybutylene succinate adipate terephthalate (PBSAT) resin.

In addition, the gas impermeable resin may comprise at least one selected from the group consisting of an ethylene-vinyl alcohol copolymer (EVOH), a polyvinyl alcohol (PVOH), a polychlorotrifluoroethylene (PCTFE), an ethylene-chlorotrifluoroethylene copolymer (ECTFE), and a polyvinylidene fluoride (PVDF).

Likewise, the third resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Corona layer or coating layer

In order to increase the effect of the subsequent processing within the scope that does not impair the effect of the embodiment, at least one side of the surfaces of the film may be subjected to corona treatment to increase the processing suitability of the film, inorganic particle coating to prevent static electricity or blocking, or coating treatment to enhance printability with a print layer.

The multilayer barrier film according to an embodiment may further comprise a corona layer disposed on one side, or the other side, of the first resin layer. Specifically, the corona layer may be directly formed on one side, or the other side, of the first resin layer.

As the multilayer barrier film further comprises a corona layer, it is possible to remove contaminants such as oil from the surface of the multilayer barrier film and create a surface that is compatible with an adhesive area, thereby increasing adhesive strength, and to chemically and physically modify the surface, thereby further enhancing hydrophilicity, adhesion, printability, coating properties, deposition properties, and the like.

The corona layer is formed by corona treatment of the first resin layer and may comprise a polar functional group selected from the group consisting of -CO, -COOH, and -OH.

The surface tension for the corona-treated side in the first resin layer may be 38 dyn/cm or more, for example, 38 to 70 dyn/cm, for example, 38 to 68 dyn/cm, or, for example, 38 to 66 dyn/cm. If the surface tension for the corona-treated side of the first resin layer satisfies the above range, it is possible to further enhance adhesion, printability, coating properties, deposition properties, and the like of the multilayer barrier film.

The multilayer barrier film according to another embodiment may further comprise a coating layer disposed on one side, or the other side, of the first resin layer.

The coating layer may comprise a primer coating layer. In such a case, performance such as antistatic properties, printability, and deposition strength can be enhanced.

The primer coating layer may be formed on one side, or the other side, of the first resin layer. Alternatively, if the multilayer barrier film comprises the corona layer, the corona layer may be formed on one side, or the other side, of the first resin layer, and the primer coating layer may be formed on one side, or the other side, of the corona layer.

Specifically, a primer coating layer may be formed by subjecting one side, or the other side, of the first resin layer to primer treatment. Alternatively, a primer coating layer may be formed by subjecting one side, or the other side, of the corona layer disposed on one side, or the other side, of the first resin layer to primer treatment.

The primer coating layer may comprise at least one having antistatic performance selected from the group consisting of ammonium-based compounds, phosphoric acid-based compounds, and polymers such as acrylic resins and urethane-based resins.

The surface resistance of the primer coating layer may be 0.1 to 30 $\Omega/\square$, 0.2 to 28 $\Omega/\square$, 0.3 to 26 $\Omega/\square$, 0.4 to 24 $\Omega/\square$, or 1 to 20 $\Omega/\square$.

The surface resistance may be evaluated for antistatic performance using a surface resistance meter at, for example, room temperature (22 $\pm$ 2°C) and relative humidity (60% $\pm$ 10%).

The thickness of the coating layer may be appropriately adjusted depending on the use and purpose of the multilayer barrier film and may specifically be 15 nm to 50 nm, 20 nm to 45 nm, 25 nm to 40 nm, or 30 nm to 35 nm, but it is not limited thereto.

Structural characteristics and physical properties of the multilayer barrier film

In the multilayer barrier film according to an embodiment, two or more different types of resin layers are alternately laminated, wherein the resin layers comprise a first resin layer comprising an aliphatic polyester-based polymer; and a second-a resin layer comprising a butenediol vinyl alcohol copolymer.

Specifically, in the multilayer barrier film according to an embodiment, two or more different types of resin layers are alternately laminated, wherein the resin layers comprise a first resin layer comprising a polylactic acid-based polymer; and a second-a resin layer comprising a butenediol vinyl alcohol copolymer.

In the multilayer barrier film according to another embodiment, two or more different types of resin layers are alternately laminated, wherein the resin layers comprise a first resin layer comprising an aliphatic polyester-based polymer; and a second-b resin layer comprising an ethylene vinyl alcohol.

Specifically, in the multilayer barrier film according to another embodiment, two or more different types of resin layers are alternately laminated, wherein the resin layers comprise a first resin layer comprising an aliphatic polyester-based polymer; and a second-b resin layer comprising an ethylene vinyl alcohol.

The total number of layers of the multilayer barrier film may be adjusted in light of the thickness of the individual layers of the film, but it may be 5 layers or more. For example, it may be 5 layers or more, 7 layers or more, 10 layers or more, 11 layers or more, 15 layers or more, 20 layers or more, 25 layers or more, or 29 layers or more, and 1,000 layers or less, 800 layers or less, 500 layers or less, or 300 layers or less, 200 layers or less, 100 layers or less, or 70 layers or less.

That is, the multilayer barrier film according to an embodiment may have a laminated structure of 5 layers or more. The multilayer barrier film according to an embodiment may have a laminated structure of 10 layers or more, 15 layers or more, 20 layers or more, or 25 layers or more, and it may have a laminated structure of 500 layers or less, 400 layers or less, 300 layers or less, 250 layers or less, 200 layers or less, 150 layers or less, or 100 layers or less. For example, the multilayer barrier film according to an embodiment may have a laminated structure of 5 layers to 500 layers, 5 layers to 300 layers, 10 layers to 200 layers, or 15 layers to 100 layers, but it is not limited thereto.

When the total number of layers of the multilayer barrier film satisfies the above range, the adhesion properties between the layers are excellent, so that no interfacial delamination takes place between the layers, resulting in excellent processability, moldability, and productivity.

Meanwhile, if the total number of layers of the multilayer barrier film is less than the above range, the oxygen permeability may increase, whereby it may be inappropriate for use as a packaging material. In particular, interfacial delamination may take place between the layers. In particular, if there is physical damage due to interfacial delamination between the layers, the defective rate of the packaging material may be significantly increased.

Specifically, as the multilayer barrier film has a laminated structure having a total number of layers of the above range or more, the thickness of each layer becomes relatively thin. An interfacial tension is applied between the layers having thin thicknesses, and the force accumulates to make the attractive force between the molecules become very strong.

In addition, the multilayer barrier film according to an embodiment may be a multilayer coextrusion film or a multilayer bonding film. Specifically, the multilayer barrier film may be a multilayer coextrusion film.

If the multilayer barrier film according to an embodiment has a structure in which only the first resin layer is employed, rather than the second resin layer (the second-a resin layer or the second-b resin layer) is alternately laminated therewith, the oxygen permeability is significantly high, whereby it is difficult to expect a role as a packaging material that requires low oxygen permeability. If the first resin layer and the second resin layer are blended to be used, it would have not only high oxygen permeability but also a very high haze; thus, it is difficult to function as a packaging material that requires transparency.

The multilayer barrier film may comprise a first resin layer as an outermost layer on both sides. Specifically, the outermost layers on both sides of the multilayer barrier film are the first resin layers.

When the outermost layers of the multilayer barrier film are first resin layers comprising an aliphatic polyester-based polymer, specifically a polylactic acid-based polymer, as a main component, it may be more advantageous for stretching and more advantageous in terms of moldability, processability, and productivity. If the outermost layers of the multilayer barrier film are second resin layers comprising a butenediol vinyl alcohol copolymer or an ethylene vinyl alcohol as a main component, stretching may not be readily carried out, casting may not be readily carried out, and adhesion may easily occur, thereby reducing moldability, processability, and productivity.

According to an embodiment, the sum of the thicknesses of the outermost layers on both sides may be 5% or more, 10% or more, 15% or more, 20% or more, 25% or more, or 30% or more, and 70% or less, 60% or less, 50% or less, 45% or less, or 40% or less, of the total thickness of the film, but it is not limited thereto. For example, the sum of the thicknesses of the outermost layers on both sides may be 5 to 50%, 10 to 50%, 20 to 50%, or 30 to 40%, of the total thickness of the film, but it is not limited thereto.

If the sum of the thicknesses of the outermost layers on both sides satisfies the above range, it may be more advantageous for achieving the effects desired in the embodiment, more advantageous for stretching, and very advantageous in terms of moldability, processability, and productivity.

In addition, the resin layers in contact with the outermost layers on both sides may each be a second resin layer.

Meanwhile, in the multilayer barrier film according to an embodiment, the average thickness ratio of individual layers of the first resin layers and the second resin layers, excluding the outermost layers on both sides, may be 1:0.5 to 2. The average thickness ratio of individual layers of the first resin layers and the second resin layers, excluding the outermost layers on both sides, may be, for example, 1: 0.5 to 1.5, for example, 1: 0.5 to 1.3, but it is not limited thereto. If the average thickness ratio of individual layers of the first resin layers and the second resin layers, excluding the outermost layers on both sides, satisfies the above range, it is possible to evenly enhance the physical properties, such as haze and oxygen permeability, of the multilayer barrier film.

In the multilayer barrier film, the average thickness of individual layers of the first resin layer, excluding the outermost layers on both sides, may be 10 nm or more, 50 nm or more, 100 nm or more, 150 nm or more, or 200 nm or more, and 1,000 nm or less, 800 nm or less, 700 nm or less, or 500 nm or less. For example, it may be 50 nm to 500 nm or 150 nm to 500 nm, but it is not limited thereto.

In the multilayer barrier film, the total thickness of the first resin layers, excluding the outermost layers on both sides, may be 1 $\mu$m or more, 3 $\mu$m or more, 5 $\mu$m or more, 6 $\mu$m or more, or 7 $\mu$m or more, and 50 $\mu$m or less, 30 $\mu$m or less, 20 $\mu$m or less, or 10 $\mu$m or less. For example, it may be 1 $\mu$m to 20 $\mu$m, 5 $\mu$m to 15 $\mu$m, or 5 $\mu$m to 10 $\mu$m, but it is not limited thereto.

In the multilayer barrier film, the average thickness of individual layers of the second resin layer, excluding the outermost layers on both sides, may be 10 nm or more, 50 nm or more, 100 nm or more, 150 nm or more, or 200 nm or more, and 1,000 nm or less, 800 nm or less, 700 nm or less, or 500 nm or less. For example, it may be 50 nm to 500 nm or 150 nm to 500 nm, but it is not limited thereto.

In the multilayer barrier film, the total thickness of the second resin layers, excluding the outermost layers on both sides, may be 1 $\mu$m or more, 3 $\mu$m or more, 5 $\mu$m or more, 6 $\mu$m or more, or 7 $\mu$m or more, and 50 $\mu$m or less, 30 $\mu$m or less, 20 $\mu$m or less, or 10 $\mu$m or less. For example, it may be 1 $\mu$m to 20 $\mu$m, 5 $\mu$m to 15 $\mu$m, or 5 $\mu$m to 10 $\mu$m, but it is not limited thereto.

The total thickness of the multilayer barrier film, including the outermost layers on both sides, may be 5 $\mu$m or more, 7 $\mu$m or more, 10 $\mu$m or more, 15 $\mu$m or more, or 20 $\mu$m or more, and 100 $\mu$m or less, 80 $\mu$m or less, 70 $\mu$m or less, or 50 $\mu$m or less, but it is not limited thereto. For example, it may be 10 $\mu$m to 50 $\mu$m or 15 $\mu$m to 30 $\mu$m, but it is not limited thereto.

If the ranges related to the thicknesses of the layers and film satisfy the above ranges, it is more advantageous for achieving the effect desired in the embodiment. In particular, the appearance properties and mechanical properties of the film can be enhanced. In addition, it may be easy to make a desired shape by folding or crumpling a food packaging film for packaging food.

The multilayer barrier film according to an embodiment is characterized by having a high level of oxygen barrier properties and transparency at the same time.

The multilayer barrier film according to an embodiment may have an oxygen permeability of 300 cc/m$^2$.atm.day or less, 100 cc/m$^2$·atm·day or less, 50 cc/m$^2$·atm·day or less, 30 cc/m$^2$·atm·day or less, 20 cc/m$^2$·atm·day or less, 15 cc/m$^2$·atm·day or less, 10 cc/m$^2$·atm·day or less, 9 cc/m$^2$·atm·day or less, 8 cc/m$^2$·atm·day or less, 7 cc/m$^2$·atm·day or less, 6 cc/m$^2$·atm·day or less, 5 cc/m$^2$·atm·day or less, or 4 cc/m$^2$·atm·day or less.

The oxygen permeability is measured at room temperature (23 $\pm$ 2°C) with a permeation area of 50 cm$^2$ using an oxygen permeability measurement device of OX-TRAN 2/21 MD of Mocon according to the ASTM D3895 standard.

If the oxygen permeability of the film exceeds the above range, the barrier properties to oxygen may be insufficient, and its use may be limited.

In addition, the multilayer barrier film may have a haze of 10% or less, 8% or less, 5% or less, 4% or less, or 3% or less.

The haze is measured using a hazemeter (model name: SEP-H) from Nihon Semitsu Kogaku.

If the haze exceeds the above range, its use may be limited due to a lack of transparency.

The multilayer barrier film may have a light transmittance of 85% to 95% or 90% to 93%, when measured at a wavelength of 550 nm.

The multilayer barrier film may have a tensile strength of 5 to 30 kg/mm$^2$, 10 to 30 kg/mm$^2$, or 10 to 25 kg/mm$^2$, according to ASTM D882.

The multilayer barrier film may have an elongation of 30% to 300%, 50% to 300%, 50% to 250%, or 50% to 200%, according to ASTM D882.

The multilayer barrier film may have a Young's modulus of 100 to 500 kg/mm$^2$, 100 to 400 kg/mm$^2$, or 200 to 400 kg/mm$^2$, according to ASTM D882.

The multilayer barrier film may have a heat shrinkage rate of 0% to 10%, 1% to 10%, 1% to 8%, or 1% to 5%, when it is placed in a convection oven at 100°C for 5 minutes, and the change before and after it is observed.

When the multilayer barrier film is crumpled by hand with force for a certain period of time, interfacial delamination does not take place between the first resin layer and the second resin layer.

Further, the multilayer barrier film may have a biodegradability of at least 30% or more, at least 40% or more, at least 50% or more, at least 60% or more, preferably 80% or more, more preferably 90% or more, due to the nature of the product intended to reduce environmental load.

The multilayer barrier film according to an embodiment satisfies a high level of oxygen barrier properties, transparency, and biodegradability at the same time; thus, it can be used in various fields as a packaging material, making it more advantageous to provide a high-quality, environmentally friendly packaging material.

Process for preparing a multilayer barrier film

The process for preparing a multilayer barrier film according to an embodiment can further enhance moldability, processability, and productivity in an economical and efficient way.

The process for preparing a multilayer barrier film according to an embodiment comprises preparing a first resin comprising an aliphatic polyester-based polymer; and a second-a resin comprising a butenediol vinyl alcohol copolymer, respectively (step 1); melt-extruding the first resin and the second-a resin, respectively, and alternately laminating a first resin layer and a second-a resin layer to obtain a sheet in which two or more different types of resin layers are alternately laminated (step 2); and biaxially stretching and heat-setting the laminated sheet to obtain a multilayer barrier film (step 3).

The process for preparing a multilayer barrier film according to another embodiment comprises preparing a first resin comprising an aliphatic polyester-based polymer; and a second-b resin comprising an ethylene vinyl alcohol, respectively (step 1); melt-extruding the first resin and the second-b resin, respectively, and alternately laminating a first resin layer and a second-b resin layer to obtain a sheet in which two or more different types of resin layers are alternately laminated (step 2); and biaxially stretching and heat-setting the laminated sheet to obtain a multilayer barrier film (step 3), wherein the oxygen permeability of the multilayer barrier film is 30 cc/m$^2$·atm·day or less.

First, the process for preparing a multilayer barrier film may comprise preparing a first resin comprising an aliphatic polyester-based polymer; and a second-a resin comprising a butenediol vinyl alcohol copolymer, respectively (step 1). Alternatively, the process for preparing a multilayer biodegradable barrier film may comprise preparing a first resin comprising an aliphatic polyester-based polymer; and a second-b resin comprising an ethylene vinyl alcohol, respectively (step 1).

Description on the first resin and the second resin (the second-a resin or the second-b resin) is as described above.

Specifically, the melt viscosity of the first resin layer is 5,000 to 15,000 poises at 210°C, the melt viscosity of the second-a resin layer is 7,000 to 18,000 poises at 210°C, and the melt viscosity of the second-b resin layer is 3,000 to 10,000 poises at 210°C.

In addition, in a multilayer structure having 5 layers or more in which the first resin layer forms the outermost layers as in the embodiment, the melt viscosity of the second resin may be the same as, or different from, the melt viscosity of the first resin. Specifically, it is preferable that the difference between the melt viscosity of the first resin and the melt viscosity of the second resin is small.

More specifically, the difference between the melt viscosity of the first resin and the melt viscosity of the second resin may be 1,000 poise or less, 500 poise or less, 300 poise or less, or 100 poise or less, but it is not limited thereto.

In addition, the process for preparing a multilayer barrier film may comprise melt-extruding the first resin and the second resin, respectively, and alternately laminating a first resin layer and a second resin layer to obtain a sheet in which two or more different types of resin layers are alternately laminated (step 2).

The melt extrusion temperature of the first resin may be 160°C to 230°C or 180°C to 220°C. The melt extrusion temperature of the second-a resin may be 180°C to 240°C or 200°C to 230°C. The melt extrusion temperature of the second-b resin may be 180°C to 230°C or 190°C to 210°C.

The melt extrusion temperature of the first resin and the melt extrusion temperature of the second resin may be the same or different. The difference between the melt extrusion temperature of the first resin and the melt extrusion temperature of the second resin may be, for example, 30°C or less, less than 30°C, 20°C or less, 15°C or less, 10°C or less, or 5°C or less, but it is not limited thereto.

When the melt extrusion temperatures of the first resin and the second resin each satisfy the above range, processability, productivity, and moldability can be improved.

According to an embodiment, the melt extrusion temperatures of the first resin and the second resin are appropriately controlled to obtain a first resin layer and a second resin layer, and they are alternately laminated to obtain a sheet in which two or more different types of resin layers are alternately laminated, whereby the desired level of oxygen barrier properties and transparency can be achieved without interlayer delamination in the final film.

Specifically, the first resin and the second resin obtained in step 1 may be melt-extruded, respectively, using two extruders and a multilayer feed block in which two layers are alternately laminated. In addition, the first resin layer and the second resin layer are divided within the multilayer feed block, the divided first resin layer and the second resin layer are alternately laminated and passed through a die, and they are brought into contact with a cooling roll cooled to 10°C to 40°C or 15°C to 25°C to obtain an unstretched multilayer barrier sheet. In such an event, the lamination may be carried out such that the first resin layer is positioned in the outermost layers on both sides. Description on the outermost layer is as described above.

Meanwhile, according to an embodiment, a step of drying the first resin and the second resin before the melt extrusion may be further carried out. The drying step may be carried out, for example, at 60°C to 120°C, 70°C to 100°C, or 80°C to 90°C, for 2 hours to 24 hours or 4 hours to 24 hours. In such an event, the drying conditions of each of the first resin and the second resin may be the same or different.

Further, the process for preparing a multilayer barrier film may comprise biaxially stretching and heat-setting the laminated sheet to obtain a multilayer barrier film (step 3).

Specifically, the laminated sheet may be biaxially stretched. The biaxial stretching step may comprise, for example, preheating to 50°C to 80°C, followed by longitudinal stretching of 2 to 4 times in the longitudinal direction (MD) at 40°C to 100°C and transverse stretching of 3 to 6 times in the transverse direction (TD) at 50°C to 150°C.

As the laminated sheet is biaxially stretched in both directions, the physical properties and moldability of the multilayer barrier film can be further enhanced; thus, a high-quality packaging material can be achieved.

If uniaxial stretching is performed in only one of the longitudinal and transverse directions, the thickness deviation of the multilayer barrier film is severe, and the mechanical properties and thermal properties in the direction in which stretching is not performed may deteriorate.

In addition, the heat setting step may be carried out at 50°C to 150°C, 70°C to 150°C, 100°C to 150°C, or 110°C to 140°C.

In the process for preparing a multilayer barrier film, a corona layer, a coating layer, or both may be further formed on one side, or the other side, of the first resin layer.

Specifically, a corona layer may be formed by subjecting the first resin layer to corona treatment.

When high-frequency and high-voltage output is applied between a discharge electrode and a treatment roll, corona discharge takes place. Here, corona treatment can be carried out by passing the desired surface through it.

Specifically, the corona discharge intensity may be, for example, 3 to 20 kW. If the corona discharge intensity is less than the above range, the corona discharge treatment effect may be minimal. On the other hand, if the corona discharge intensity exceeds the above range, excessive surface modification may cause surface damage.

The configuration and physical properties of the corona layer are as described above.

In addition, a coating layer may be formed on one side, or the other side, of the first resin layer.

The coating layer may comprise a primer coating layer. The primer coating layer may be formed by subjecting one side, or the other side, of the first resin layer to primer treatment with a primer composition comprising at least one selected from the group consisting of ammonium-based compounds, phosphoric acid-based compounds, and polymers such as acrylic resins and urethane-based resins, which forms surface roughness to further enhance adhesion properties.

The primer coating layer may be formed on one side, or the other side, of the first resin layer. Alternatively, if the multilayer barrier film comprises the corona layer, the corona layer may be formed on one side, or the other side, of the first resin layer, and the primer coating layer may be formed on one side, or the other side, of the corona layer.

In addition, the primer composition may contain a curing agent component. More specific examples thereof include 4,4'-diaminodiphenylmethane (DDM), aromatic diamines, and mixtures thereof. The amount of the curing agent component added may be 0.1 to 50% by weight based on the total weight of the primer composition.

The primer treatment method may be a conventional method used in the art, for example, spraying, brushing, rolling, and the like. Specifically, the primer composition may be sprayed using an airless spray onto the surface of the first resin layer under the conditions of an induction time of 1 to 30 minutes, a spray pressure of 5 to 500 MPa, a nozzle diameter of 0.46 to 0.58 mm, and a spray angle of 40 to 80°.

In addition, in order to increase the adhesion of the multilayer barrier film, surface treatment such as plasma treatment, ultraviolet irradiation treatment, flame treatment, or saponification treatment may be appropriately carried out.

When the multilayer barrier film is prepared according to the preparation process as described above, it is economical and efficient and can be more effective in preparing a multilayer barrier film having the desired configuration and physical properties.

When the multilayer barrier film is prepared according to the preparation process as described above, it is economical and efficient and can be more effective in preparing a multilayer barrier film having the desired configuration and physical properties.

In addition, description on the multilayer barrier film is as described above.

Packaging material

The packaging material according to an embodiment has the characteristics of the multilayer barrier film and has environmentally friendly features as it is biodegradable at a certain level; thus, it can be used in various fields as a packaging material with high quality.

Specifically, the packaging material comprises a multilayer barrier film, wherein the multilayer barrier film comprises two or more different types of resin layers alternately laminated, and the resin layers comprise a first resin layer comprising an aliphatic polyester-based polymer; and a second-a resin layer comprising a butenediol vinyl alcohol copolymer.

Alternatively, the packaging material comprises a multilayer barrier film, wherein the multilayer barrier film comprises two or more different types of resin layers alternately laminated, wherein the resin layers comprise a first resin layer comprising an aliphatic polyester-based polymer; and a second-b resin layer comprising an ethylene vinyl alcohol, and the oxygen permeability of the multilayer barrier film is 30 cc/m$^2$·atm·day or less.

Description on the multilayer barrier film is as described above.

The packaging material may be in the form of a film that can be used as general disposable films and food packaging materials, in the form of a fiber that can be used as fabrics, knitted fabrics, nonwoven fabrics, ropes, or in the form of a container that can be used as a container for food packaging such as a lunch box.

As the packaging material comprises a multilayer barrier film with a high level of oxygen barrier properties and transparency at the same time without interlayer interfacial delamination, it can provide excellent physical properties and quality. In addition, a packaging material, which is biodegradable at a certain level and has environmentally friendly features, can be provided; thus, it can be used in various fields as a packaging material to exhibit excellent characteristics.

When the packaging material is used, it is possible to preserve the good appearance of the packaged product without deterioration as much as possible over a long period of time. In particular, when the packaging material is used for food packaging, it may be advantageous in expanding the shelf life of the food.

Hereinafter, the present invention will be described in more detail with reference to the following examples. But the following Examples are intended to illustrate the present invention, and the scope of the Examples is not limited thereto only.

### Embodiments for Carrying Out the Invention

Hereinafter, the present invention will be described in detail with reference to Examples. But the following examples are intended to illustrate the present invention, and the scope of the present invention is not limited thereto only.

### <Example>

### Test Example 1a: Preparation of a multilayer barrier film

A polylactic acid resin (Nature Works LLC, 4032D) with a D-lactide content of about 1.4% weight and a melt viscosity of about 8,770 poise at about 210°C was used as a resin for a first resin layer; and a butenediol vinyl alcohol copolymer having a melt viscosity of about 7,000 poise at 210°C and a saponification degree of 99% and certified under ISO 14855 was used as a resin for a second-a resin layer.

The resin for a first resin layer was dried at about 80°C for 6 hours using a dehumidifying dryer, and the resin for a second-a resin layer was dried at about 80°C for 2 hours using a dehumidifying dryer, to remove moisture. Using two extruders and a multilayer feed block in which two layers are alternately laminated, the resin for a first resin layer and the resin for a second-a resin layer were each melt-extruded with an extruder at a temperature of 210°C.

Within the multilayer feed block, the first resin layer was divided into 15 layers, and the second-a resin layer was divided into 14 layers. The divided first resin layers and the second-a resin layers were passed through a die of 780 mm to be alternately laminated, and they were brought into contact with a cooling roll cooled to about 21°C to obtain an unstretched multilayer barrier sheet having 29 layers. In such an event, the first resin layer was placed on the outermost layers on both sides, and the sum of the thicknesses of the outermost layers on both sides was 30% of the total thickness.

The unstretched multilayer barrier sheet thus obtained was stretched 3.0 times in the longitudinal direction at about 65°C and 3.9 times in the transverse direction at 120°C, heat set at 120°C, and given a relaxation rate of 1% to prepare a multilayer barrier film having 29 layers and a total thickness of 20 μm.

### Test Examples 2a to 4a: Preparation of a multilayer barrier film

Each multilayer barrier film was prepared in the same manner as in Test Example 1a, except that the respective number of the first resin layers and the second-a resin layers, the sum of the thicknesses of the outermost layers on both sides, and the saponification degree of the BVOH were changed as shown in Table 1, respectively.

**Test Example 5a: Preparation of a multilayer barrier film**

As shown in Table 1, a multilayer barrier film with 3 layers of PLA, BVOH, and PLA was prepared. Here, the thickness ratio of PLA layer:BVOH layer:PLA layer was about 1:1:1.

**Test Example 6a: Preparation of a single-layer biodegradable film**

As shown in Table 1, a single-layer film was prepared using the resin for a first resin layer used in Test Example 1a. Specifically, a single-layer biodegradable film was prepared in the same manner as in Test Example 1a, except that the resin for a first resin layer was dried in a dehumidifying dryer at about 60°C for 8 hours and that the stretching in the transverse direction was carried out at 3.8 times.

**Test Example 7a: Preparation of a single-layer biodegradable film**

As shown in Table 1, the resin for a first resin layer and the resin for a second-a resin layer used in Test Example 1a were hand-mixed at a weight ratio of 70:30 and then blended in a 45-phi twin-screw extruder at 210°C. A single-layer biodegradable film was prepared in the same manner as in Test Example 1a, except that it was dried in a dehumidifying dryer at about 60°C for 8 hours and that the stretching in the transverse direction was carried out at 3.8 times.

**Test Example 8a: Preparation of a multilayer barrier film**

As shown in Table 1, a multilayer barrier film was prepared in the same manner as in Test Example 1a, except that a polybutylene adipate terephthalate (PBAT) resin, which is an aliphatic-aromatic copolyester resin with a melt viscosity of about 6,300 poise at 210°C and an aliphatic component content of about 50% by mole among the acid components, was used as the resin for second-a resin layer.

**Test Example 1b: Preparation of a multilayer barrier film**

A polylactic acid resin (Nature Works LLC, 4032D) with a D-lactide content of about 1.4% weight and a melt viscosity of about 8,770 poise at about 210°C was used as a resin for a first resin layer; and an ethylene vinyl alcohol having a melt viscosity of about 4,800 poise at 210°C and an ethylene content of 44% by mole was used as a resin for a second-b resin layer.
The resin for a first resin layer was dried at about 80°C for 6 hours using a dehumidifying dryer, and the resin for a second-b resin layer was dried at about 80°C for 2 hours using a dehumidifying dryer, to remove moisture. Using two extruders and a multilayer feed block in which two layers are alternately laminated, the resin for a first resin layer and the resin for a second-b resin layer were each melt-extruded with an extruder at a temperature of 210°C.
Within the multilayer feed block, the first resin layer was divided into 15 layers, and the second-b resin layer was divided into 14 layers. The divided first resin layers and the second-b resin layers were passed through a die of 780 mm to be alternately laminated, and they were brought into contact with a cooling roll cooled to about 21°C to obtain an unstretched multilayer sheet having 29 layers. In such an event, the first resin layer was placed on the outermost layers on both sides, and the sum of the thicknesses of the outermost layers on both sides was 30% of the total thickness.
The multilayer sheet thus obtained was stretched 3.0 times in the longitudinal direction at about 65°C and 3.9 times in the transverse direction at 120°C, heat set at 120°C, and given a relaxation rate of 1% to prepare a multilayer barrier film having 29 layers and a total thickness of 20 μm.

**Test Examples 2b to 5b: Preparation of a multilayer barrier film**

Each multilayer barrier film was prepared in the same manner as in Test Example 1b, except that the respective number of the first resin layers and the second-b resin layers, the sum of the thicknesses of the outermost layers on both sides, and the ethylene content of the EVOH were changed as shown in Table 2, respectively.

**Test Example 6b: Preparation of a multilayer barrier film**

As shown in Table 2, a multilayer barrier film was prepared in the same manner as in Test Example 1b, except that the respective number of the first resin layers and the second-b resin layers was changed, the thickness ratio of PLA layer:EVOH layer:PLA layer was about 1:1:1, and the stretching in the transverse direction was carried out at 3.8 times.

**Test Example 7b: Preparation of a single-layer barrier film**

As shown in Table 2, a single-layer film was prepared using the resin for a first resin layer used in Test Example 1b. Specifically, a single-layer film was prepared in the same manner as in Test Example 1b, except that the resin for a first resin layer was dried in a dehumidifying dryer at about 60°C for 8 hours and that the stretching in the transverse direction was carried out at 3.8 times.

**Test Example 8b: Preparation of a single-layer barrier film**

As shown in Table 2, the resin for a first resin layer and the resin for a second-b resin layer used in Test Example 1b were hand-mixed at a weight ratio of 70:30 and then blended in a 45-phi twin-screw extruder at 200°C. A single-layer film was prepared in the same manner as in Test Example 1b, except that it was dried in a dehumidifying dryer at about 60°C for 8 hours and that the stretching in the transverse direction was carried out at 3.8 times.

**Test Example 9b: Preparation of a multilayer barrier film**

As shown in Table 2, a multilayer barrier film was prepared in the same manner as in Test Example 1b, except that a polybutylene adipate terephthalate (PBAT) resin, which is an aliphatic-aromatic copolyester resin with a melt viscosity of about 6,300 poise at 210°C and an aliphatic component content of about 50% by mole among the acid components, was used as the resin for second-b resin layer.

**<Evaluation Example>**

The single-layer and multilayer barrier films prepared according to Test Examples 1a to 8a were each measured for physical properties in the following manner. The results are shown in Table 1 below.

**Evaluation Example 1: Haze**

The haze was measured according to the ASTM D1003 standard using a hazemeter (model name: SEP-H) from Nihon Semitsu Kogaku.

**Evaluation Example 2: Oxygen permeability**

The oxygen permeability is measured at room temperature (23 $\pm$ 2°C) with a permeation area of 50 cm$^2$ using an oxygen permeability measurement device of OX-TRAN 2/21 MD of Mocon according to the ASTM D3895 standard.

**Evaluation Example 3: Interfacial delamination of the film**

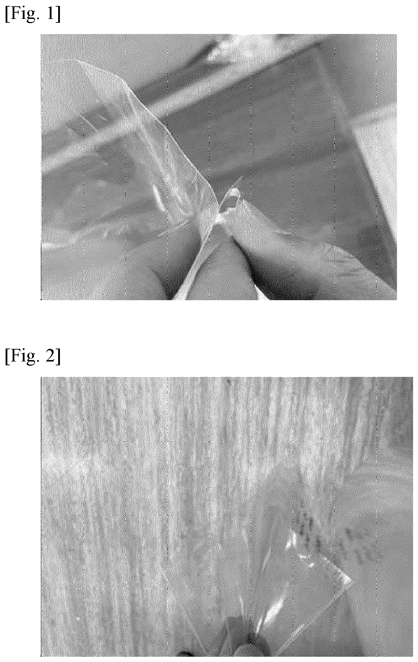

Each of the multilayer films (Test Examples 1a to 5a) was crumpled by hand with force for a certain period of time, and interlayer delamination between the first resin layer and the second-a resin layer was determined. When interfacial delamination between the layers did not occur, it was evaluated as ×. When delamination was observed with the naked eye, it was evaluated as o.
Here, a picture of Test Example 5a, in which interlayer delamination was observed with the naked eye, is shown in Fig. 1.
In addition, each of the multilayer films (Test Examples 1b to 6b and 9b) was crumpled by hand with force for a certain period of time, and interlayer delamination between the first resin layer and the second-b resin layer was determined. When interfacial delamination between the layers did not occur, it was evaluated as ×. When delamination was observed with the naked eye, it was evaluated as o.
Here, a picture of Test Example 6b, in which interlayer delamination was observed with the naked eye, is shown in Fig. 2.

[Table 1]

| | | T. Ex. 1a | T. Ex. 2a | T. Ex. 3a | T. Ex. 4a | T. Ex. 5a | T. Ex. 6a | T. Ex. 7a | T. Ex. 8a |
|---|---|---|---|---|---|---|---|---|---|
| | | PLA/ BVOH | PLA/ BVOH | PLA/ BVOH | PLA/ BVOH | PLA/ BVOH | PLA single layer | PLA /BVOH blended single layer | PLA/ PBAT |
| First resin | Comp. | PLA | PLA | PLA | PLA | PLA | PLA 100% | PLA 70% | PLA |
| | No. of layers | 15 | 22 | 29 | 29 | 2 | - | - | 15 |
| | Sum of thicknesses of outermost layers (%) | 30 | 32 | 40 | 40 | - | - | - | 30 |
| | Extrusion temp. (°C) | 210 | 210 | 210 | 210 | 210 | 210 | 210 | 210 |
| Second-a resin | Comp. | BVOH | BVOH | BVOH | BVOH | BVOH | - | BVOH 30% | PBAT |
| | Degree of saponification (%) | 99 | 99 | 99 | 80 | 99 | - | 99 | - |
| | No. of layers | 14 | 21 | 28 | 28 | 1 | - | - | 14 |
| | Extrusion temp. (°C) | 210 | 210 | 210 | 210 | 210 | - | 210 | 210 |
| Total No. of layers | | 29 | 43 | 57 | 57 | 3 | 1 | 1 | 29 |
| Film thickness ($\mu$m) | | 20 | 20 | 20 | 20 | 20 | 20 | 20 | 20 |
| Film properties | Haze (%) | 2.6 | 2.4 | 2.9 | 2.9 | 3.1 | 1.5 | 15 | 3.5 |
| | Oxygen permeability (cc/ ($m^2$·atm·day)) | 2 | 3 | 9 | 9.5 | - | 755 | 450 | 1130 |
| | Interlayer delamination | × | × | × | × | ○ | - | - | × |

As can be seen from Table 1 above, for the biodegradable films of Test Examples 1a to 4a, the physical properties related to transparency and barrier properties to oxygen were all excellent, and the interfacial delamination of the film did not occur. Accordingly, the multilayer barrier films according to Test Examples 1a to 4a can be used environmentally friendly for various applications including packaging applications in which transparency and barrier properties to oxygen are required.

In contrast, in Test Example 5a, even though the same resin components were used as in Test Examples 1a to 4a, as it had a laminated structure of less than 5 layers, interfacial delamination occurred between the layers, resulting in physical damage. In Test Examples 6a to 8a, the oxygen permeability was significantly increased. In particular, in Test Example 7a, in which PLA and BVOH were blended to prepare a single-layer film, the haze was also very high, making it difficult to be used as a packaging material that requires transparency.

[Table 2]

| | | T.Ex. 1b | T.Ex. 2b | T.Ex. 3b | T.Ex. 4b | T.Ex. 5b | T. Ex. 6b | T. Ex. 7b | T. Ex. 8b | T. Ex. 9b |
|---|---|---|---|---|---|---|---|---|---|---|
| | | PLA/ EVOH | PLA/ EVOH | PLA/ EVOH | PLA/ EVOH | PLA/ EVOH | PLA/ EVOH 3 layers | PLA single layer | PLA /EVOH blend ed single layer | PLA/ PBAT |
| First resin | Comp. | PLA | PLA | PLA | PLA | PLA | PLA | PLA 100% | PLA 70% | PLA |
| | No. of layers | 15 | 22 | 29 | 29 | 29 | 2 | - | - | 15 |
| | Sum of thicknesses of outermost layers (%) | 30 | 32 | 40 | 40 | 40 | - | - | - | 30 |
| | Extrusion temp. (°C) | 210 | 210 | 210 | 210 | 210 | 210 | 210 | 210 | 210 |
| Second -a resin | Comp. | EVO H | EVO H | EVO H | EVO H | EVO H | EVO H | - | EVO H 30% | PBAT |
| | Degree of saponification (%) | 44 | 44 | 44 | 38 | 29 | 44 | - | 44 | - |
| | No. of layers | 14 | 21 | 28 | 28 | 28 | 1 | - | - | 14 |
| | Extrusion temp. (°C) | 210 | 210 | 210 | 210 | 210 | 210 | - | 210 | 210 |
| Total No. of layers | | 29 | 29 | 43 | 57 | 57 | 57 | 3 | 1 | 1 |
| Film thickness ($\mu$m) | | 20 | 20 | 20 | 20 | 20 | 20 | 20 | 20 | 20 |
| Film propert ies | Haze (%) | 2.6 | 2.4 | 2.9 | 2.9 | 2.9 | 3.1 | 1.5 | 15 | 3.5 |
| | Oxygen permeability (cc/ (m$^2$·atm·day) ) | 6.9 | 7.2 | 8.5 | 5.4 | 3.4 | 6.5 | 755 | 250 | 1130 |
| | Interlayer delamination | × | × | × | × | × | ○ | - | - | × |

As can be seen from Table 2 above, for the multilayer films of Test Examples 1b to 5b, the physical properties related to transparency and barrier properties to oxygen were all excellent, and the interfacial delamination of the film did not occur. Accordingly, the multilayer films according to Test Examples 1b to 5b can be used environmentally friendly for various applications including packaging applications in which transparency and barrier properties to oxygen are required.

In contrast, in Test Example 6b, even though the same resin components were used as in Test Examples 1b to 3b, as it had a laminated structure of 3 layers, interfacial delamination occurred between the layers, resulting in physical damage. In Test Examples 7b to 9b, the oxygen permeability was significantly increased. In particular, in Test Example 8b, in which PLA and EVOH were blended to prepare a single-layer film, the haze was also very high, making it difficult to be used as a packaging material that requires transparency.

## Claims

1. A multilayer barrier film, which comprises two or more different types of resin layers alternately laminated, wherein the resin layers comprise a first resin layer comprising an aliphatic polyester-based polymer; and a second-a resin layer comprising a butenediol vinyl alcohol copolymer (BVOH).

2. The multilayer barrier film of claim 1, wherein the degree of saponification of the butenediol vinyl alcohol copolymer is 30% or more.

3. The multilayer barrier film of claim 1, wherein the oxygen permeability is 30 cc/m$^2$·atm·day or less.

4. A multilayer barrier film, which comprises two or more different types of resin layers alternately laminated, wherein the resin layers comprise a first resin layer comprising an aliphatic polyester-based polymer; and a second-b resin layer comprising an ethylene vinyl alcohol (EVOH), and the oxygen permeability is 30 cc/m$^2$·atm·day or less.

5. The multilayer barrier film of claim 4, wherein the content of ethylene in the ethylene vinyl alcohol is 70% by mole or less.

6. The multilayer barrier film of claim 4, wherein the melt viscosity of the first resin layer is 5,000 to 15,000 poises at 210°C, and the melt viscosity of the second-b resin layer is 3,000 to 10,000 poises at 210°C.

7. The multilayer barrier film of claim 1 or 4, wherein the aliphatic polyester-based polymer comprises at least one selected from the group consisting of polylactic acid, polycaprolactone, polyhydroxyalkanoate, polyglycolic acid, polybutylene succinate, polybutylene adipate, and each copolymer thereof.

8. The multilayer barrier film of claim 1 or 4, wherein the multilayer barrier film has a laminated structure of 5 layers or more.

9. The multilayer barrier film of claim 1 or 4, wherein the outermost layers on both sides of the multilayer barrier film are the first resin layers, and the sum of the thicknesses of the outermost layers on both sides is 5 to 50% of the total thickness of the film.

10. The multilayer barrier film of claim 1 or 4, wherein the haze is 10% or less.

11. A process for preparing a multilayer barrier film of claim 1, which comprises:

preparing a first resin comprising an aliphatic polyester-based polymer; and a second-a resin comprising a butenediol vinyl alcohol copolymer, respectively (step 1);
melt-extruding the first resin and the second-a resin, respectively, and alternately laminating a first resin layer and a second-a resin layer to obtain a sheet in which two or more different types of resin layers are alternately laminated (step 2); and
biaxially stretching and heat-setting the laminated sheet to obtain a multilayer barrier film (step 3).

12. The process for preparing a multilayer barrier film of claim 11, wherein the melt viscosity of the first resin layer is 5,000 to 15,000 poises at 210°C, the melt viscosity of the second-a resin layer is 7,000 to 18,000 poises at 210°C, the melt extrusion temperature of the first resin is 180°C to 220°C, and the melt extrusion temperature of the second-a resin is 200°C to 230°C.

13. A process for preparing a multilayer barrier film of claim 4, which comprises:

preparing a first resin comprising an aliphatic polyester-based polymer; and a second-b resin comprising an ethylene vinyl alcohol, respectively (step 1);
melt-extruding the first resin and the second-b resin, respectively, and alternately laminating a first resin layer and a second-b resin layer to obtain a sheet in which two or more different types of resin layers are alternately laminated (step 2); and
biaxially stretching and heat-setting the laminated sheet to obtain a multilayer barrier film (step 3),
wherein the oxygen permeability of the multilayer barrier film is 30 cc/m$^2$·atm·day or less.

14. The process for preparing a multilayer barrier film of claim 13, wherein the melt extrusion temperature of the first resin is 180°C to 220°C, the melt extrusion temperature of the second-b resin is 180°C to 230°C, and the difference in melt extrusion temperature between the first resin layer and the second-b resin layer is 30°C or less.

**15.** A packaging material, which comprises the multilayer barrier film of claim 1 or 4.

[Fig. 1]

[Fig. 2]

## INTERNATIONAL SEARCH REPORT

| International application No. |
| --- |
| **PCT/KR2022/016077** |

| A. | CLASSIFICATION OF SUBJECT MATTER |
| --- | --- |

**B32B 27/36**(2006.01)i; **B32B 27/32**(2006.01)i; **B32B 38/18**(2006.01)i; **B32B 38/00**(2006.01)i; **B29C 48/08**(2019.01)i; **B32B 27/30**(2006.01)i

According to International Patent Classification (IPC) or to both national classification and IPC

| B. | FIELDS SEARCHED |
| --- | --- |

Minimum documentation searched (classification system followed by classification symbols)

B32B 27/36(2006.01); A47G 19/22(2006.01); B31C 7/02(2006.01); B32B 1/02(2006.01); B32B 27/08(2006.01); B32B 27/10(2006.01); B32B 27/28(2006.01); B32B 7/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다층 배리어 필름(multilayer barrier film), 부텐다이올 비닐알코올 코폴리머 (butenediol vinyl alcohol copolymer), 에틸렌 비닐알코올 코폴리머(ethylene vinylalcohol copolymer), 산소투과도(oxygen permeability)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-160155 A (ACHILLES CORP.) 11 October 2021 (2021-10-11)<br>See claims 1-4; paragraphs [0056] and [0066]; table 1; and figure 1. | 1-3,7-9,11-12,15 |
| Y | | 4-6,10,13-14 |
| Y | JP 2008-155432 A (DAINIPPON PRINTING CO., LTD.) 10 July 2008 (2008-07-10)<br>See claims 1 and 11; paragraph [0022]; example 2; and table 1. | 4-6,10,13-14 |
| A | KR 10-2020-0046620 A (SE LIM B&G CO., LTD.) 07 May 2020 (2020-05-07)<br>See entire document. | 1-15 |
| A | CN 109955555 A (LIU, Jianlin et al.) 02 July 2019 (2019-07-02)<br>See entire document. | 1-15 |

| ✓ Further documents are listed in the continuation of Box C. | ✓ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **30 January 2023** | **30 January 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2022/016077** |

**C.    DOCUMENTS CONSIDERED TO BE RELEVANT**

| Category* | Citation of document, with indication, where appropriate, of the relevant passages | Relevant to claim No. |
|---|---|---|
| A | US 2018-0304573 A1 (DENKA COMPANY LIMITED) 25 October 2018 (2018-10-25)<br>See entire document. | 1-15 |

Form PCT/ISA/210 (second sheet) (July 2022)

**INTERNATIONAL SEARCH REPORT**
Information on patent family members

| International application No. |
| --- |
| **PCT/KR2022/016077** |

| Patent document cited in search report | | | Publication date (day/month/year) | Patent family member(s) | | | Publication date (day/month/year) |
| --- | --- | --- | --- | --- | --- | --- | --- |
| JP | 2021-160155 | A | 11 October 2021 | None | | | |
| JP | 2008-155432 | A | 10 July 2008 | JP | 5632118 | B2 | 26 November 2014 |
| KR | 10-2020-0046620 | A | 07 May 2020 | KR | 10-2115881 | B1 | 27 May 2020 |
| CN | 109955555 | A | 02 July 2019 | None | | | |
| US | 2018-0304573 | A1 | 25 October 2018 | CN | 106585017 | A | 26 April 2017 |
| | | | | EP | 3366470 | A1 | 29 August 2018 |
| | | | | EP | 3366470 | A4 | 08 May 2019 |
| | | | | JP | 2018-069127 | A1 | 02 August 2018 |
| | | | | JP | 6996978 | B2 | 17 January 2022 |
| | | | | TW | 201722727 | A | 01 July 2017 |
| | | | | WO | 2017-069127 | A1 | 27 April 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006272712 A

- JP 2003160202 A